# EUROPEAN PATENT APPLICATION

(11) **EP 2 824 591 A1**
(43) Date of publication of application: **14.01.2015**
(21) Application number: 13758530.3
(22) Date of filing: 25.02.2013
(51) Int. Cl.: G06F 17/30

(54) **OUTPUT DEVICE, OUTPUT SYSTEM, AND PROGRAM**

(30) Priority: 08.03.2012 JP 2012052144
(71) Applicant: Omron Corporation, Kyoto-shi, Kyoto 600-8530 (JP)
(72) Inventor: ISAGO Ryo, Tokyo 108-0075 (JP); KOMORI Goro, Tokyo 108-0075 (JP)
(74) Representative: Kilian Kilian & Partner
(86) International application number: PCT/JP2013/054742
(87) International publication number: WO 2013/133067

(57) **Abstract**

A display device (1) receives input of data of a target state and data of a current state in an input unit (15). The display device (1) also senses a state of a shift portion for shifting from the current state to another state including the target state and generates sensing data. The display device (1), in a communication unit (12), transmits the sensing data, the data of the target state, and the data of the current state to a predetermined external device, and receives from the external device suitability determination result data acquired by determination of the suitability of the shift portion for shifting from the current state to the target state. Then, the display device (1) displays received the suitability determination result data on a display portion (13).

## Description

### Technical Field

The present invention relates to an output device that outputs various types of information, an output system that uses the output device, and a program.

### Background Art

Conventionally, a proposal has been made of a system in which overlay information is displayed so as to be superimposed on an image captured with a camera (see Patent Literature 1, for example).

The system disclosed in Patent Literature 1 retrieves information associated with an image captured with a camera, and displays retrieved information so as to be superimposed on a captured image.

### Citation List

### Patent Literature

Patent Literature 1: Japanese Patent Laid-Open Publication No. 2011-55250

### Summary of Invention

### Technical Problem

However, the conventional system only displays relevant information of a captured item and has not displayed information that a user desires.

An object of the present invention is to provide an output device, an output system, and a program that output information that a user desires.

### Solution to Problem

An output device according to a preferred embodiment of the present invention includes: a first input portion configured to input data of a target state; a second input portion configured to input data of a current state; a sensing portion that senses a state of a shift portion configured to shift from the current state to another state including the target state and generates sensing data; a transmission portion that transmits the sensing data, the data of the target state, and the data of the current state, to a predetermined external device; a reception portion that receives from the external device suitability determination result data acquired by determination of suitability of the shift portion configured to shift from the current state to the target state, based on the sensing data, the data of the target state, and the data of the current state; and an output portion that outputs the suitability determination result data that the reception portion has received.

It is to be noted the "current state" referred to in the preferred embodiments is defined as a present state of an object to which a target state is set. This current state can be expressed as a point corresponding to the current time on a "state space" as a space configured with one or more variables expressing a state of the object as an axis.

The "target state" shows a position of a target on the state space.

The "another state" is defined as an arbitrary state that can be shifted by a shift portion. As the "another state," a "target state" can be set or an intermediate state that is a midway stage from a current state to a target state can also be set.

The "shift portion" is a means for shifting from each point on the state space to another point on the state space.

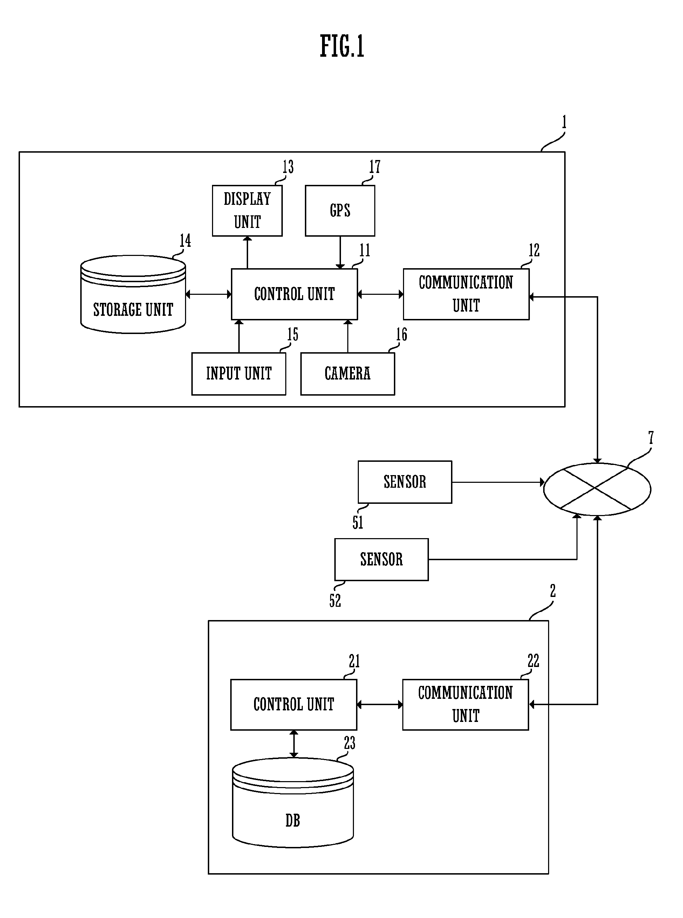

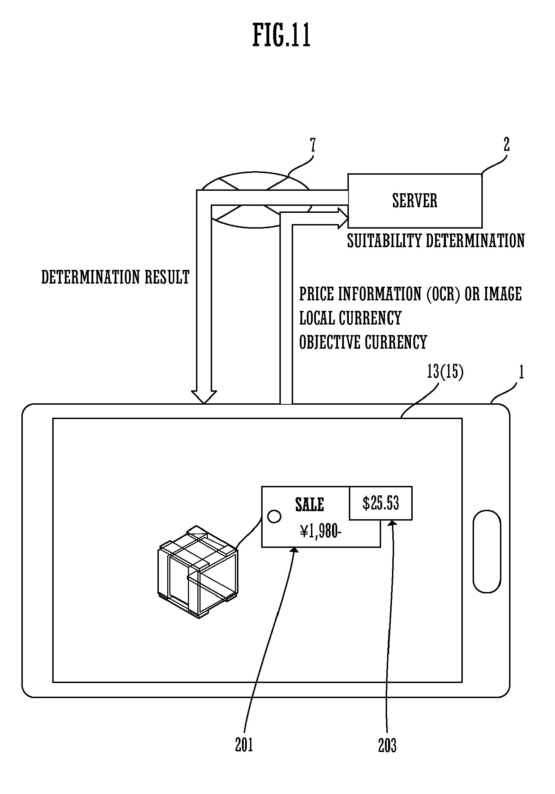

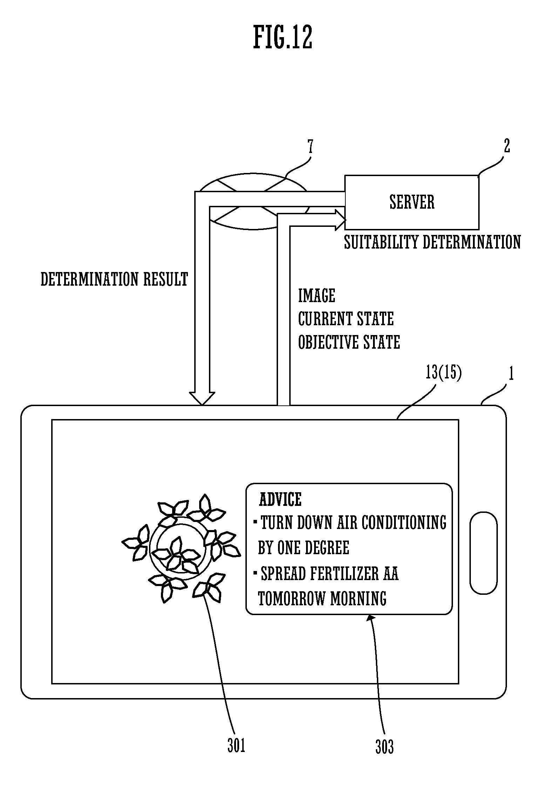

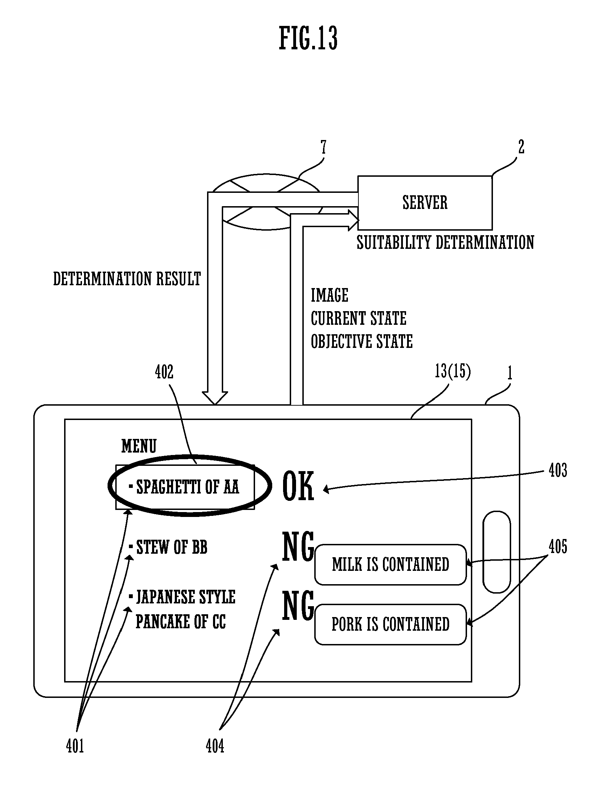

The "suitability" shows whether or not a shift portion suits a route from a position of a current state in the state space to a position of a target state in the state space. The suitability can be described by two values of "suitable" or "unsuitable" or can also be described by a multi-stage value as a degree of suitability.
(1) In an example of a train illustrated in FIG. 1 to FIG. 5, the target state is a destination location to which a railroad user is going. The current state is a current location in which the railroad user is present at the time. In this example of the train, the state space can be described as a four-dimensional space configured by a total of four dimensions consisting of the three dimensions of latitude, longitude, and altitude in addition to one dimension of time. However, a "train operation chart" (train diagram) can also be set as a state space. In the train diagram, a vertical axis indicates a name of a station in a line and a horizontal axis indicates time. In addition, the shift portion is a train that is operated according to a specific operation schedule. The suitability is a degree of suitability of the train that is operated according to the specific operation schedule with respect to a route from the current location to the destination location.
(2) In an example of foreign currency exchange illustrated in FIG. 11, the state space is a space configured by an axis of the amount of held cash in the currency of the country of the current location and an axis of the amount of held cash in the currency of the home country. Then, the current state is a state of holding cash only in the currency of the country of the current location and can be described as a point of (X, 0) as a pair of X that is the cash holding amount in the currency of the country of the current location and 0 that is the cash holding amount in the currency of the home country. Moreover, the target state is a state of holding the cash holding amount Y only in the currency of the home country, and, when being similarly expressed by the state space, can be described as (0, Y). In this case, the shift portion is a foreign currency exchange service. In such a case, as the degree of suitability, a scale in which the larger Y/X is better can be also used.
(3) In an example of plant growth illustrated in FIG. 12, the state space is a space configured by two axes of an axis of the size of a plant and an axis of the color of the plant. The target state is a pair of ideal values of the size and color of a plant to be grown. The current state is a pair of current values of the size and color of the plant to be grown. The shift portion in this case is expressed in the combination of an amount of water, a type of a fertilizer, and an amount of the fertilizer that are given to the plant at a specific timing. In addition, the suitability of this shift portion may be also set to a value of probability of reaching the target state by the execution of the shift portion in the current state.
(4) In an example of selection of a dish illustrated in FIG. 13, the state space is a space configured by the amount of respective allergy-causing substances and the amount of respective nutritional substances that are contained in a meal. The current state is a state in which both the respective substances are zero due to no meal. The target state is a state in which the respective nutritional substances have a sufficient amount and respective allergy-causing substances are zero. The suitability can be considered as a degree that shows each menu item can be eaten or drunk, or cannot be eaten or drunk, in terms of taking a necessary nutritional substance while avoiding the intake of an allergy-causing substance.

Then, a user captures a direction board with a camera as a sensing means mounted in a mobile phone (the output device of the present invention) belonging to the user. The data of a captured image is equivalent to the sensing data.

An external device (server) analyzes image data received from the mobile phone by using a method such as a character recognition function, extracts train information displayed on the direction board, and sets this train information as a feature amount. Then, the external device searches a database and acquires a route from a current station to a destination station from the database. The external device collates a searched and acquired route with extracted train information (the feature amount), and determines suitability. For example, the external device, among a plurality of trains displayed on a captured direction board, determines a train that is suitable for the route. This determination result is transmitted to the mobile phone of the user.

The mobile phone outputs a received determination result. For example, the mobile phone displays text data such as "Platform No. 3, 9:14, Semi-Express, Get off at the fifth station," and displays information on the train to be taken.

Alternatively, it may be also possible to display on a screen the determination result in association with the shift portion. Particularly, in the image data of the captured direction board, by superimposing and displaying the information of the train to be taken (displaying a mark that shows that the train is available to be taken, for example), the user can intuitively determine which train to take. Furthermore, it is also possible to output the determination result by voice.

It should be noted the extraction of a feature amount may be performed in the server or may be performed in the mobile phone. In addition, it is further possible to employ a mode in which, without the transmission and reception with the external device, all the processes in the server are processed in the mobile phone. In such a case, various types of databases are prepared in the mobile phone.

### Advantageous Effects of Invention

The present invention can make it possible to output information that a user desires.

### Brief Description of Drawings

FIG. 1 is a block diagram showing a configuration of a display system.
FIG. 2 is a view showing an example in a case of capturing a direction board using a display device.
FIG. 3 is a view showing a mode in which information is transmitted from the display device to a server.
FIG. 4 is a view showing an example in which a determination result is superimposed and displayed.
FIG. 5 is a view showing an example in which the determination result is displayed by text data.
FIG. 6 is a view showing the display system in a case of using congestion information.
FIG. 7A is a view showing a station information database and FIG. 7B is a view showing a train information database.
FIG. 8A is a view showing another train information database and FIG. 8B is a view showing a transfer information database.
FIG. 9 is a flow chart illustrating an operation performed by a server 2.
FIG. 10 is a flow chart illustrating an operation performed by the server 2.
FIG. 11 is a view showing a display system according to another example 1.
FIG. 12 is a view showing a display system according to another example 2.
FIG. 13 is a view showing a display system according to another example 3.

### Description of Embodiments

FIG. 1 is a block diagram showing a configuration of a display system provided with a display device that is an example of an output device of the present invention. The display system is provided with a display device 1, a server 2, and a plurality of sensors (a sensor 51 and a sensor 52 in the example of FIG. 1), which are connected through the Internet 7.

The display device 1 may be an information processing apparatus such as a mobile phone and a PDA that belong to a user. The display device 1 is equipped with a control unit 11, a communication unit 12, a display unit 13, a storage unit 14, an input unit 15, a camera 16, and a GPS 17.

The control unit 11 performs the operations of transmitting various types of data to the server 2 through the communication unit 12 and the Internet 7, receiving the data from the server 2, and displaying received data on the display unit 13.

The server 2 is equipped with a control unit 21, a communication unit 22, and a database (DB) 23.

The control unit 21 receives sensing data that is a result acquired by sensing an object, from the display device 1, the sensor 51, and the sensor 52 and the like through the communication unit 22 and the Internet 7. The sensor includes a camera, a GPS, a temperature sensor, a moisture sensor, an illuminance sensor, and an air pressure sensor. The object may be a direction board (a thing that shows information such as the departure time, the destination, a train type, and the platform number of each train) installed at the passenger station of a railroad, for example.

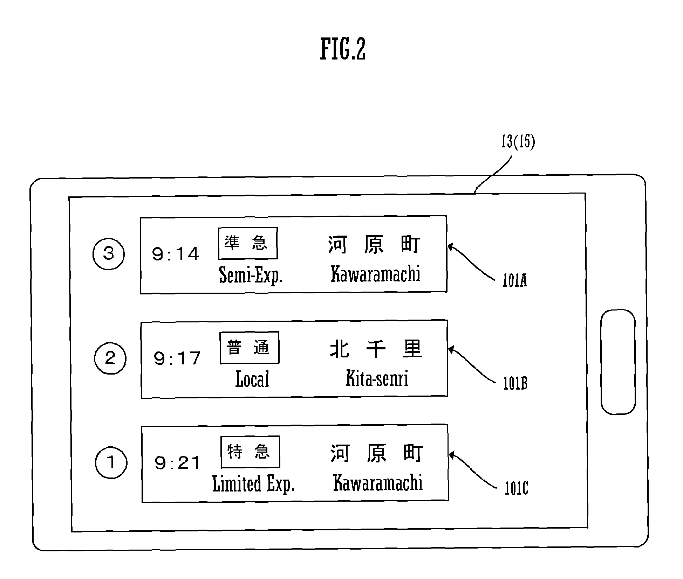

As shown in FIG. 2, the display device 1 is equipped with a touch panel functioning as both the display unit 13 and the input unit 15. A user captures a direction board by using the sensor (camera) 16. The data of an image captured here is equivalent to the sensing data. The direction board displays train information 101 (101A, 101B, 101C), including the departure time, the destination, the train type, and the platform number of each train. In the example of FIG. 2, three pieces of train information 101A, 101B, and 101C are displayed.

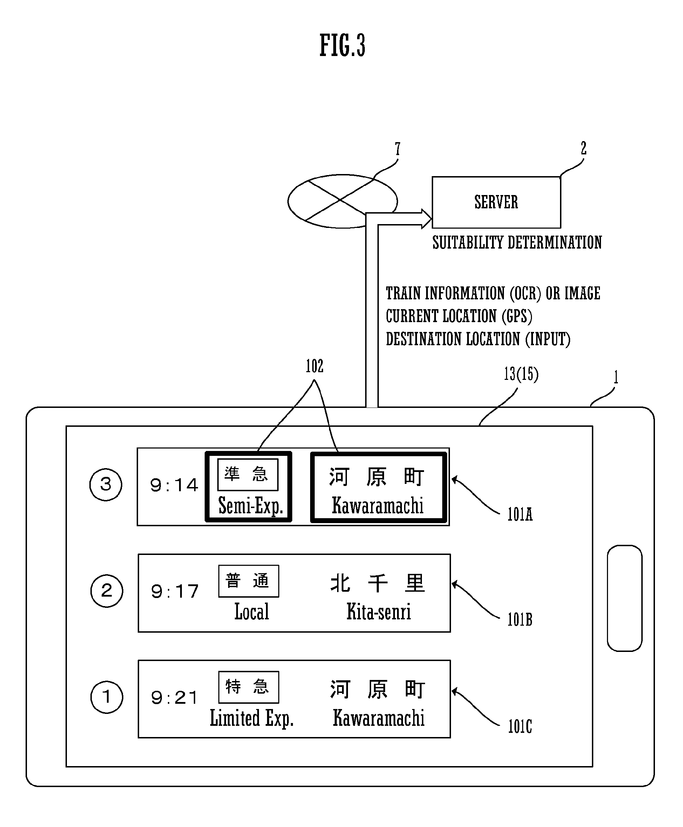

The control unit 11 reads a program stored in the storage unit 14 and extracts a feature amount by pattern recognition. The feature amount is obtained by extracting specific information out of a captured image. In this example, as shown in FIG. 3, the part of "Semi-Exp." and the part of "Kawaramachi" are extracted by using a character recognition function, and character information 102 is extracted as a feature amount.

Then, the control unit 11 transmits an extracted feature amount to the server 2. It is to be noted a mode in which the data of the captured image is transmitted to the server 2, and the control unit 21 of the server 2 extracts a feature amount may be employed.

In addition, the control unit 11 transmits the information of a current location and the information of a destination location to the server 2. The information of a current location is station name information that shows a station that is nearest to a current location and is detected by the GPS 17, and is equivalent to the data of a current state defined by the present invention. The information of the destination location is station name information that shows a station that is nearest to a destination location inputted by a user, and is equivalent to the data of a target state defined by the present invention.

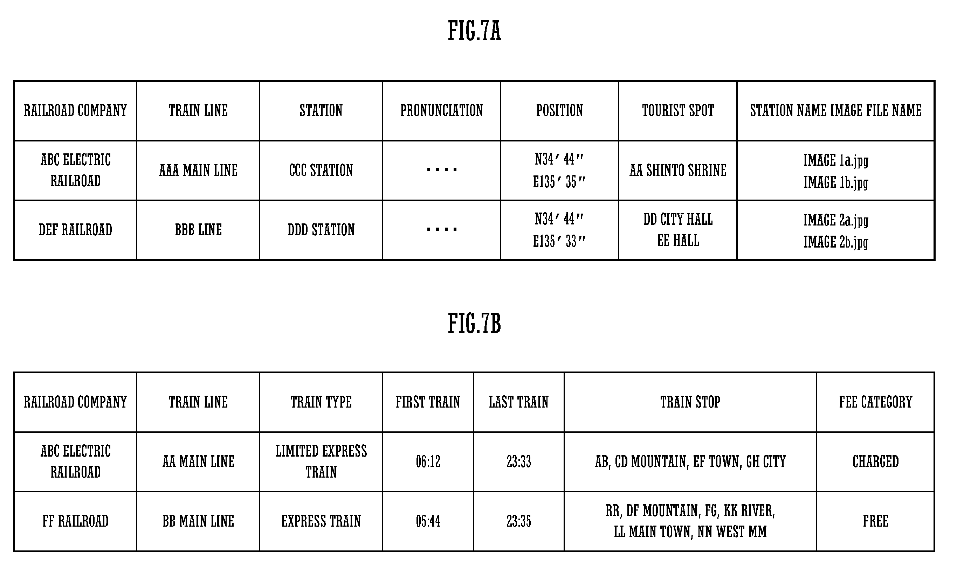

It should be noted, as the information of the current location, for example, station name information of a station nearest to the current location detected by the GPS 17, is automatically selected. Moreover, the display unit 13 may display a list of stations near the current location (less than or equal to a predetermined distance) or such stations may be displayed on a map, which may allow a user to make a selection. Furthermore, lists of railroad companies, train lines, or stations in the station information database (database downloaded from the storage unit 14 or the server 2) as shown in FIG. 7A may be displayed to allow a user to make a selection. Alternatively, a user captures a signboard of a station by using the camera 16, and the control unit 11 may read the name of the station from the image data by using the character recognition function, may display the candidates of stations with the same name on the display unit 13, and may allow the user to make a selection. Additionally, a mode in which a microphone (not shown) equipped with the display device 1 acquires voice of a user so as to receive the input of a station name by speech recognition may be employed.

Moreover, as the information of the destination location, station name information of a station nearest to the current location detected by the GPS 17, may be automatically selected, the display unit 13 may display a list of stations near the current location (less than or equal to a predetermined distance), or such stations may be displayed on a map, which may allow a user to make a selection. Furthermore, lists of railroad companies, train lines, or stations in the station information database (database downloaded from the storage unit 14 or the DB 23 of the server 2) as shown in FIG. 7A may be displayed to allow a user to make a selection. Additionally, a mode in which a microphone (not shown) equipped with the display device 1 acquires voice of a user so as to receive the input of a station name by speech recognition may be employed.

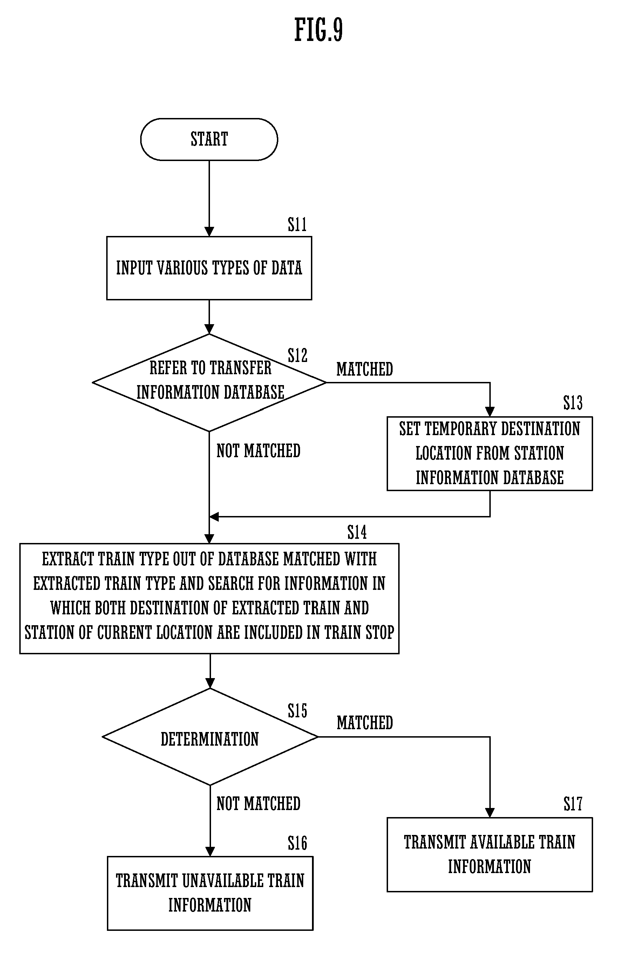

A description is made of the operation of the server 2 with reference to the flow chart of FIG. 9. As shown in FIG. 3, the server 2 receives character information 102 transmitted from the display device 1, the station name information of a current location, and the station name information of a destination location (s11). Then, the server 2 searches the DB 23 for a route from the station of the current location to the station of the destination location, and determines the suitability of a train shown in each piece of character information 102 with respect to the route.

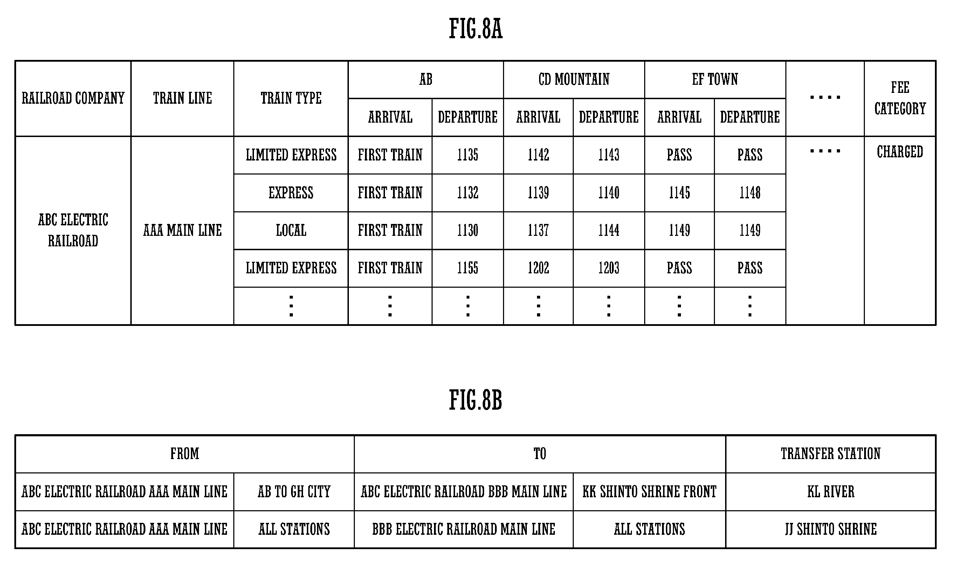

FIG. 7B illustrates an example of a train information database. FIG. 8A illustrates a train information database including an arrival and departure time at each station of each train in addition to the train information shown in FIG. 7B. FIG. 8B illustrates a transfer information database. These databases are stored in the DB 23 of the server 2. These databases are equivalent to the knowledge information defined by the present invention, and the DB 23 is equivalent to the knowledge information storage portion defined by the present invention.

To begin with, the server 2 refers to the transfer information database (s12). In this preferred embodiment, the server 2 determines whether or not there is station name information of the current location that matches "From" of the transfer information database and there is also station name information of the destination location that matches "To" of the transfer information database. The server 2, when having determined there is matched station name information, sets a transfer station described in the transfer information database as a temporary destination station (s13).

Subsequently, the server 2 extracts a train of which type matches the train type shown in received character information 102, from the train information database of FIG. 7B or FIG. 8A. In searching the train information database of FIG. 8A, a departure time is also extracted from the train information 101 (101A, 101B, 101C) and is collated with the departure time of the train information database (s14).

Additionally, the server 2 searches the train information database of FIG. 7B or FIG. 8A for information in which a destination station name shown in the character information 102, a station name of the current location, and an objective station name are included in a train stop (s14).

Thus, the server 2 determines the suitability (whether or not to reach a destination location) between the route to the objective station acquired by searching the DB 23 and each train of the character information 102 (s15). In a case in which there is character information 102 matched with all in the train information database in s14, the server 2 transmits available train information as a determination result to the display device 1 (s17) while, in a case in which there is no matched character information 102, the server 2 outputs unavailable train information as a determination result to the display device 1 (s18). These determination results are equivalent to the suitability determination result data defined by the present invention.

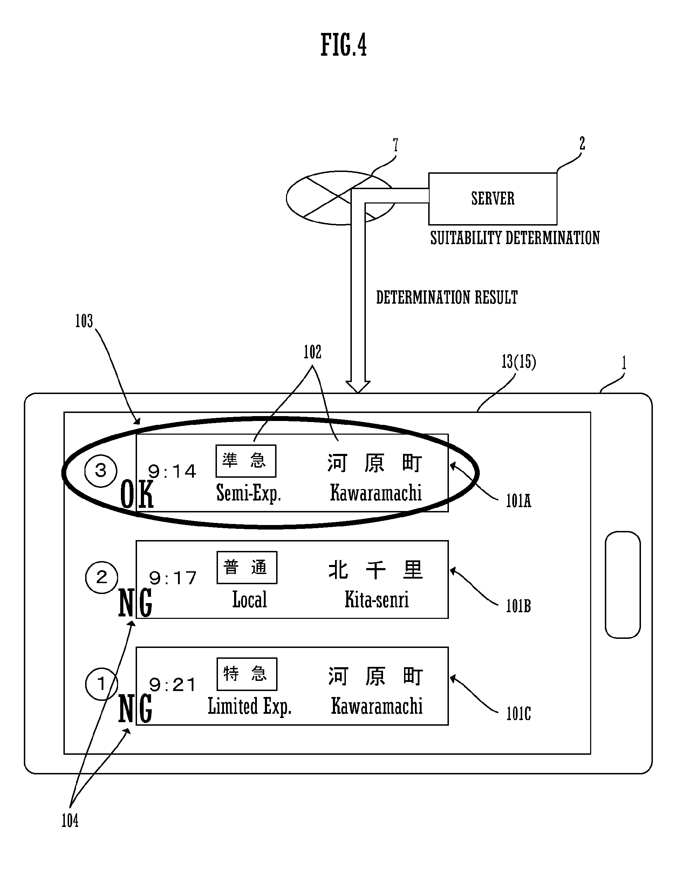

The display device receives these determination results from the server 2 and displays the determination results on the display unit 13. For example, as shown in FIG. 4, when receiving the available train information, the display device may preferably display an available train mark (OK mark) 103 by superimposing the mark on the train information 101A corresponding to the character information 102 that the available train information shows. When receiving the unavailable train information, the display device may preferably display an unavailable train mark (NG mark) 104 by superimposing the mark on the train information 101B and the train information 101C corresponding to the character information 102 that the unavailable train information shows.

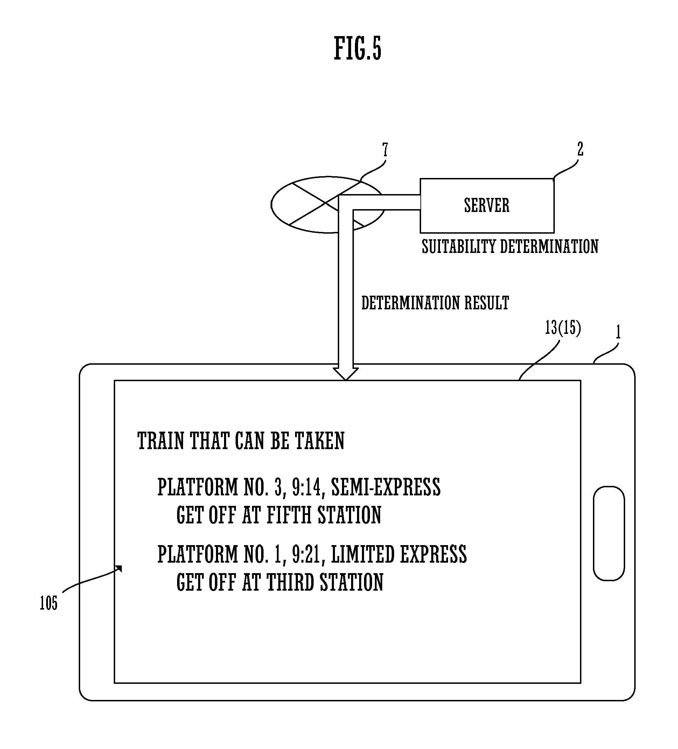

Alternatively, as shown in FIG. 5, a mode in which text data such as "Platform No. 3, 9:14, Semi-Express, Get off at the fifth station" is generated and displayed so as to display the information of a train to be taken can be employed.

In this way, a user only captures a direction board with a camera and can easily determine whether or not each train is a train to be taken. It is to be noted even if a user captures with the camera the display of a train type (a local, a semi-express, for example), a destination, and a train number that are displayed on the side of the train that stops at the platform of a station, similarly to the case of capturing the direction board, the available train mark (OK mark) 103 or the unavailable train mark (NG mark) 104 can also be displayed by superposing the mark on an image on the side of the train. In addition, the same is applicable to not only a train but also a bus.

It should be noted, as shown in FIG. 7B and FIG. 8A, the train information database includes information that shows a free or charged category. For example, when selecting the station name of a current location, and the objective station name, "use of a charged train," "no use of a charged train," and the like is selected, so that information selected in this way is transmitted to the server 2 and used for collation with the train information database. Thus, a user can specify various types of conditions for use in the determination of suitability.

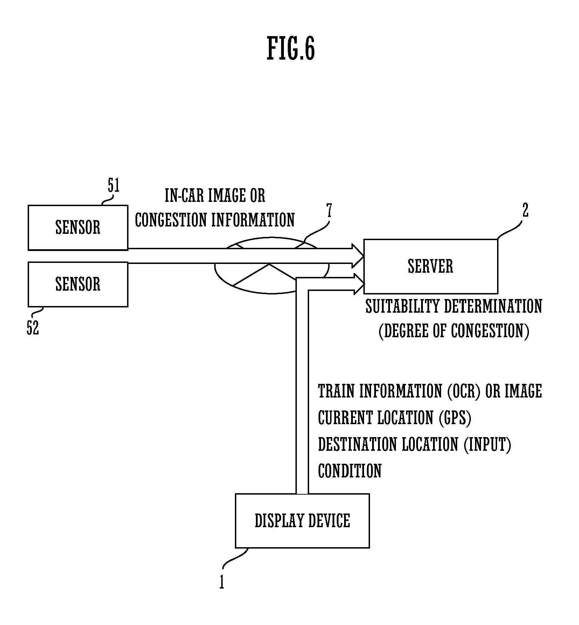

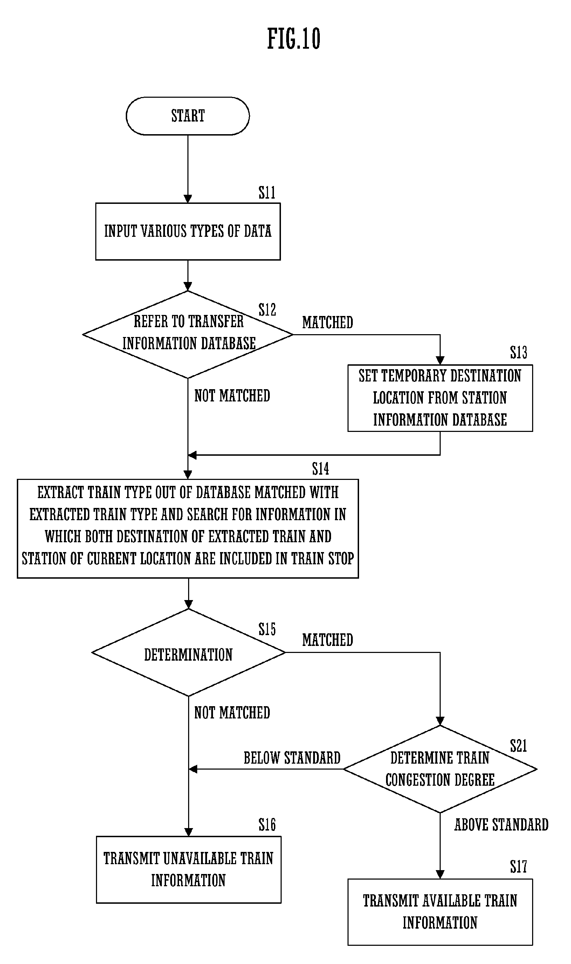

For example, as shown in FIG. 6 and FIG. 10, the degree of congestion of a train can be used for the determination of suitability. It is to be noted, in the flow chart shown in FIG. 10, the parts common with FIG. 9 are given the same reference numerals and descriptions of the parts are omitted.

In this example, the information that specifies the degree of congestion specified by a user is transmitted from the display device 1 to the server 2. The degree of congestion, for example, when selecting the station name of a current location or an objective station name, is generated by selecting "in consideration of the degree of congestion of a train," "in no consideration of the degree of congestion of a train," and the like. The selected information is transmitted to the server 2 and is used for collation with the train information database.

Additionally, to the server 2, an in-car image of a train or information that shows a degree of congestion from the sensor 51 and the sensor 52 is transmitted. When the in-car image is transmitted, the server 2 converts the image into information that shows the degree of congestion. The information that shows the degree of congestion, for example, is generated by first extracting an image of a passenger from an image in a train and then calculating the occupancy of the image of the passenger in the whole of the image, and is shown as a degree of congestion by setting a no passenger state as 0% and the maximum as 100%.

The server 2, as shown in FIG. 10, determines the suitability (whether or not to reach a destination location) of each train in s15 and, after having determined there is a matched train, performs the determination of a degree of congestion of the train (s21). For example, in a case in which the degree of congestion exceeds 50%, the degree of congestion is determined below the standard and thus the unavailable train information is outputted as a determination result to the display device 1 (s18). Only in a case in which the degree of congestion is less than 50%, the available train information is transmitted to the display device 1 as a determination result (s17).

It should be noted the sensor 51 and the sensor 52 may be fixed cameras installed in each train and may have a mode in which the sensor automatically transmits data to the server 2, or a mode in which a user manually captures the inside of a train by using a mobile phone or the like belonging to the user or a mode in which a degree of congestion is inputted may be employed. Moreover, in the case of manually inputting the degree of congestion, it is desirable to allow a user to select the train that the user is now on among previously specified pieces of train information.

Furthermore, with a mobile phone equipped with the GPS, it is also possible to employ a mode in which latitude and longitude information is transmitted to the server 2. In such a case, the server 2 can search for a relevant train with reference to the train information database by using received latitude and longitude information and a time when the information is received, and thus can obtain the degree of congestion of each train.

Subsequently, FIG. 11, FIG. 12, and FIG. 13 are views showing other examples of the display system of this preferred embodiment of the present invention. FIG. 11 is a view showing a display system according to another example 1. In this example, a user captures a tag and the like on which the price of an article is displayed, by using the sensor (camera) 16.

The control unit 11 extracts the text of "1980 yen" that is price information 201 as a feature amount of captured image data mainly by the character recognition function. Then, the control unit 11 transmits extracted price information 201 to the server 2. It is to be noted, also in this example, a mode in which the data of the captured image is transmitted to the server 2, and the control unit 21 of the server 2 extracts a feature amount may be employed.

In addition, the control unit 11 transmits the currency information of a current location and objective currency information to the server 2. The currency information of a current location is a currency of the country of the current location detected by the GPS 17, and is equivalent to the data of a current state defined by the present invention. The objective currency information is a currency of the home country inputted by a user and is equivalent to the data of a target state defined by the present invention. Moreover, the price information is equivalent to the shift portion for shifting from the currency of the current location (current state) to another currency (another state). The data of an image captured is equivalent to the sensing data.

The server 2 receives the price information 201, the currency information of the current location, and the target currency information that are transmitted from the display device 1. Then, the server 2 searches the DB 23 for a route (currency exchange in a bank, payment by a credit card, payment with travelers check, etc., for example) for shifting from the currency of the current location to an objective currency. Then, the server 2 determines the suitability of the price information with respect to the route. In the DB 23, an exchange rate between currencies is included, so that, in this example, as the suitability, a price converted into the objective currency is calculated. The server 2 extracts a route by which the price will be the lowest when being converted into the objective currency, for example, and sets the price of the objective currency in an extracted route as a determination result. The price information of the objective currency in the route with the lowest price is equivalent to the suitability determination result data defined by the present invention. It should be noted not only the lowest price but also price information in a plurality of routes may be set as the suitability determination result data.

The display device 1 receives the price information from the server 2 and displays the price information on the display unit 13. For example, as shown in FIG. 11, "$25.53" as price information 203 of the objective currency may preferably be displayed so as to be superimposed on the price information 201. Naturally, it is also possible to employ a mode in which text data is generated and the price information of the objective currency is displayed separately from the price information 201.

Thus, a user only captures price information with a camera and can easily determine the price in the currency of the home country.

Subsequently, FIG. 12 is a view showing a display system according to another example 2. In this example, a user captures a plant by using the sensor (camera) 16.

The control unit 11 extracts the growth situation of a plant 301 as a feature amount of image data. The growth situation is obtained by a difference from a previously captured image, a distance from the ground, an occupancy rate of green color, and the like. The information that shows the growth situation is transmitted to the server 2. Alternatively, the control unit 11 may transmit image data to the server 2 and may cause the server 2 to extract the growth situation. In this example, temperature data and humidity data are also extracted as sensing data.

In addition, the control unit 11 transmits the data of a current state and also the data of an objective state to the server 2. The data of the current state in this example is the number of growing days after planting the plant, for example. The data of the objective state is an ideal size or color of the plant, for example. If the plant is an edible plant, the objective state is a state in which the plant is ready to be eaten. Moreover, the shift portion in this example is equivalent to the type of water or a fertilizer, the amount of a fertilizer, and the like that are given to the plant.

The server 2 receives data showing the growth situation, the number of growing days, and the objective state of the plant that are transmitted from the display device 1. Then, the server 2 searches the DB 23 for a route (when and which timing a fertilizer is given, for example) for shifting from the current state of the plant to the objective state of the plant. In this example, the DB 23, for each plant name, accumulates data showing the optimal temperature, the optimal humidity, a standard size, a fertilizer type, an amount of a fertilizer, on each growing day. The server 2 determines the suitability of the growth situation with respect to the route. In this example, as the suitability, measures for making the current situation change to the most suitable situation in which a plant grows and reaches an objective state are required. For example, information that a temperature should be lowered by one degree is required. Alternatively, information that shows the type of a fertilizer and a timing when the fertilizer should be given (a fertilizer AA is to be spread tomorrow morning, for example) is required. These pieces of information are equivalent to the suitability determination result data defined by the present invention.

It is to be noted a case in which the state space is a space configured with two axes of the axis of a plant size and the axis of a plant color may also be considered. In such a case, the target state may be a pair of ideal values of the size and color of a plant to be grown. The current state is a pair of current values of the size and color of the plant to be grown. The shift portion is expressed by the combination of the amount of water, the type of a fertilizer, and the amount of the fertilizer that are given to the plant at a specific timing. The suitability can also be set to a value of the probability of reaching the target state by executing the shift portion (giving a predetermined amount of water and a specific fertilizer at a specific timing) in the current state.

The display device 1 receives the above stated information (information of lowering a temperature by one degree or information of spreading a fertilizer AA tomorrow morning, for example) from the server 2, and displays such information on the display unit 13. For example, as shown in FIG. 12, "Turn down air conditioning by one degree and spread a fertilizer AA tomorrow morning" as advice information 303 may preferably be displayed so as to be superimposed on the plant 301. Naturally, it is also possible to employ a mode in which text data is generated and the advice information is displayed separately from the plant 301.

Thus, a user only captures a plant with a camera and can easily determine measures for raising a plant to an objective growth situation.

Subsequently, FIG. 13 is a view showing a display system according to another example 3. In this example, a user captures a menu 401 of a restaurant by using the sensor (camera) 16. This example shows an example in which, when raw materials that cannot be eaten or drunk due to an allergic or a religious reason are present in the menu 401, the raw materials are automatically displayed, for example.

The control unit 11 extracts menu information 402, by using a method such as a character recognition function, as a feature amount of image data. Then, the control unit 11 transmits extracted menu information 402 to the server 2. It is to be noted, also in this example, a mode in which the data of a captured image is transmitted to the server 2, and the control unit 21 of the server 2 extracts a feature amount may be employed.

In addition, the control unit 11 transmits current status data and target status data to the server 2. Current information data includes the name of a dish (spaghetti, stew, and the like) extracted from the image data by using a method such as a character recognition function, or the name of a dish that a user selects from a list in person. Target information data is information of raw materials that a user has inputted as the raw materials the user cannot eat or drink. Moreover, the shift portion in this example is equivalent to the menu.

The server 2 receives the menu information, dish name information, and information of raw materials that cannot be eaten or drunk that are transmitted from the display device 1. Then, the server 2 searches the DB 23 for a route (showing food ingredients and seasonings necessary to cook each menu item, for example) for extracting information in which a material cannot be eaten or drunk from each menu item. The server 2 determines the suitability of the menu information with respect to the food ingredients and the seasonings. In this example, as the suitability, the information of whether each menu item can be eaten or drunk or cannot be eaten or drunk is extracted. In a case in which there is a match between the information of the raw materials that a user has inputted the user cannot eat or drink, and the food ingredients, the seasonings, and the like that are included in the route, the server 2 outputs ingestion not-allowed information with respect to the menu information. In the case in which there is no match between the information of the raw materials that the user has inputted the user cannot eat or drink, and the food ingredients, the seasonings, and the like that are included in the route, the server 2 outputs ingestion allowed information with respect to the menu information.

It should be noted there may also be an example in which the state space is a space configured by the amount of each allergy-causing substance and the amount of each nutritional substance that are contained in a meal. In such a case, the current state is a state in which respective substances are zero due to no meal. The target state is a state in which respective nutritional substances have a sufficient amount and respective allergy-causing substances are zero. The suitability can be considered as a degree that shows each menu item can be eaten or drunk, or cannot be eaten or drunk, in terms of taking a necessary nutritional substance while avoiding the intake of an allergy-causing substance.

The display device 1 receives these determination results from the server 2 and displays the determination results on the display unit 13. For example, as shown in FIG. 13, when receiving the ingestion allowed information, the display device may preferably display an ingestion allowed mark (OK mark) 403 by superimposing the mark on the menu information that the ingestion allowed information shows. When receiving the ingestion not-allowed information, the display device may preferably display an ingestion not-allowed mark (NG mark) 404 by superimposing the mark on the menu information that the ingestion not-allowed information shows. In addition, as shown in FIG. 13, raw material information 405 may be displayed.

In this way, a user only captures a menu with a camera, and can easily determine whether or not each menu item can be eaten or drunk.

It is to be noted, while, in the above described examples, a determination result is displayed on the display unit 13, the output form of this determination result is not limited to such a display and the determination result may be outputted by voice or may be outputted in an output form other than this form.

### Reference Signs List

- 1: Display device
- 2: Server
- 7: Internet
- 11: Control unit
- 12: Communication unit
- 13: Display unit
- 14: Storage unit
- 15: Input unit
- 16: Camera
- 17: GPS
- 21: Control unit
- 22: Communication portion
- 23: DB
- 51: Sensor
- 52: Sensor

## Claims

1. An output device comprising:
a first input portion configured to input data of a target state;
a second input portion configured to input data of a current state;
a sensing portion that senses a state of a shift portion configured to shift from the current state to another state including the target state and generates sensing data;
a transmission portion that transmits the sensing data, the data of the target state, and the data of the current state, to a predetermined external device;
a reception portion that receives from the external device suitability determination result data acquired by determination of suitability of the shift portion configured to shift from the current state to the target state, based on the sensing data, the data of the target state, and the data of the current state; and
an output portion that outputs the suitability determination result data that the reception portion has received.

2. An output device comprising:
a first input portion configured to input data of a target state;
a second input portion configured to input data of a current state;
a sensing portion that senses a state of a shift portion configured to shift from the current state to another state including the target state and generates sensing data;
a feature amount extraction portion that extracts a feature amount from the sensing data;
a transmission portion that transmits the feature amount, the data of the target state, and the data of the current state, to a predetermined external device;
a reception portion that receives from the external device suitability determination result data acquired by determination of suitability of the shift portion configured to shift from the current state to the target state, based on the feature amount, the data of the target state, and the data of the current state; and
an output portion that outputs the suitability determination result data that the reception portion has received.

3. The output device according to claim 1 or 2, wherein the output portion outputs the suitability determination result data in association with the shift portion.

4. The output device according to claim 3, wherein the output portion displays the suitability determination result data superimposed on a captured image of the shift portion.

5. The output device according to claim 3, wherein the output portion outputs the suitability determination result data as information generated based on the shift portion.

6. An output system comprising:
a first input portion configured to input data of a target state;
a second input portion configured to input data of a current state;
a sensing portion that senses a state of a shift portion configured to shift from the current state to another state including the target state and generates sensing data;
a feature amount extraction portion that extracts a feature amount from the sensing data;
a knowledge information storage portion that retains a plurality of pieces of knowledge information that can be used to acquire information of a route from the current state to the target state;
a route acquisition portion that searches the knowledge information storage portion and acquires the information of the route from the current state to the target state based on the data of the target state and the data of the current state;
a suitability determination portion that, based on the feature amount, determines suitability of the shift portion with respect to the information of the route that the route acquisition portion has acquired; and
an output portion that outputs suitability determination result data as a determination result of the suitability determination portion.

7. The output system according to claim 6, wherein the output portion outputs the suitability determination result data in association with the shift portion.

8. The output system according to claim 7, wherein the output portion displays the suitability determination result data superimposed on a captured image of the shift portion.

9. The output system according to claim 7, wherein the output portion outputs the suitability determination result data as information generated based on the shift portion.

10. A program that causes an information processing apparatus to execute steps comprising:
a first input step of inputting data of a target state;
a second input step of inputting data of a current state;
a sensing step of sensing a state of a shift portion configured to shift from the current state to another state including the target state and generating sensing data;
a transmission step of transmitting the sensing data, the data of the target state, and the data of the current state, to a predetermined external device;
a reception step of receiving from the external device suitability determination result data acquired by determination of suitability of the shift portion configured to shift from the current state to the target state based on the sensing data, the data of the target state, and the data of the current state; and
an output step of outputting the suitability determination result data received in the reception step.

11. A program that causes an information processing apparatus to execute steps comprising:
a first input step of inputting data of a target state;
a second input step of inputting data of a current state;
a sensing step of sensing a state of a shift portion configured to shift from the current state to another state including the target state and generating sensing data;
a feature amount extraction step of extracting a feature amount from the sensing data;
a transmission step of transmitting the feature amount, the data of the target state, and the data of the current state, to a predetermined external device;
a reception step of receiving from the external device suitability determination result data acquired by determination of suitability of the shift portion configured to shift from the current state to the target state based on the feature amount, the data of the target state, and the data of the current state; and
an output step of outputting the suitability determination result data received in the reception step.

12. A program that causes an information processing apparatus to execute steps comprising:
a first input step of inputting data of a target state;
a second input step of inputting data of a current state;
a sensing step of sensing a state of a shift portion configured to shift from the current state to another state including the target state and generating sensing data;
a feature amount extraction step of extracting a feature amount from the sensing data;
a route acquisition step of searching a knowledge information storage portion that retains a plurality of pieces of knowledge information that can be used to acquire information of a route from the current state to the target state and acquiring the information of a route from the current state to the target state, based on the data of the target state and the data of the current state;
a suitability determination step of, based on the feature amount, determining suitability of the shift portion with respect to the information of the route acquired in the route acquisition step; and
an output step of outputting suitability determination result data as a determination result in the suitability determination step.

13. The program according to claim 10, 11, or 12, wherein the output step outputs the suitability determination result data in association with the shift portion.

14. The program according to claim 13, wherein the output step displays the suitability determination result data superimposed on a captured image of the shift portion.

15. The program according to claim 13, wherein the output step outputs the suitability determination result data as information generated based on the shift portion.
